# EUROPEAN PATENT APPLICATION

(11) **EP 4 253 581 A1**
(43) Date of publication of application: **04.10.2023**
(21) Application number: 21897705.6
(22) Date of filing: 09.11.2021
(51) Int. Cl.: C22C 11/06, C22F 1/00, C22F 1/12, H01M 4/14, H01M 4/68

(54) **LEAD ALLOY, ELECTRODE FOR LEAD STORAGE BATTERIES, LEAD STORAGE BATTERY, AND POWER STORAGE SYSTEM**

(30) Priority: 30.11.2020 JP 2020199171
(71) Applicant: FURUKAWA ELECTRIC CO., LTD., Chiyoda-ku Tokyo 100-8322 (JP); The Furukawa Battery Co., Ltd., Yokohama-shi, Kanagawa-ken 240-0006 (JP)
(72) Inventor: KANEKO, Hiroshi, Tokyo 100-8322 (JP); YAMAUCHI, Miho, Tokyo 100-8322 (JP); OGIWARA, Yoshiaki, Tokyo 100-8322 (JP); FURUKAWA, Jun, Iwaki-shi, Fukushima 972-8501 (JP); YAMADA, Keizo, Iwaki-shi, Fukushima 972-8501 (JP); KOIDE, Ayano, Iwaki-shi, Fukushima 972-8501 (JP); SATO, Atsushi, Iwaki-shi, Fukushima 972-8501 (JP)
(74) Representative: Grünecker Patent- und Rechtsanwälte PartG mbB
(86) International application number: PCT/JP2021/041246
(87) International publication number: WO 2022/113731

(57) **Abstract**

Provided is a lead alloy that is hard to cause extension even when force is applied to the lead alloy. The half width of a (311) diffraction peak in a diffraction chart obtained by analyzing the lead alloy by an X-ray diffraction method is 1.4 times or more of the half width of a (311) diffraction peak in a diffraction chart obtained by analyzing powder of pure lead by the X-ray diffraction method.

## Description

The present invention relates to a lead alloy, a lead storage battery electrode, a lead storage battery, and a power storage system.

### Background Art

An electrode of a lead storage battery includes an electrode lead layer made of a lead alloy, and an active material disposed on the surface of the electrode lead layer. At the time when a lead storage battery electrode is manufactured, a roller is used in some cases, and the lead storage battery electrode is manufactured such that a foil of a lead alloy to constitute an electrode lead layer is attached to a substrate by pressing the foil of the lead alloy against the substrate with the roller.

In the meantime, in order to efficiently use the internal volume of a lead storage battery, it is requested to reduce the thickness of an electrode lead layer in the lead storage battery. The thickness of an electrode lead layer of a conventional lead storage battery is around 1 mm, but the thickness is requested to be 0.5 mm or less, for example.

However, in a case where the thickness of the electrode lead layer is reduced, the foil of the lead alloy might extend at the time when force is applied to the foil of the lead alloy with the roller at the time of manufacture of the lead storage battery electrode, and therefore, there is such a concern that an edge part of the foil of the lead alloy may deviate from a predetermined part of the substrate (hereinafter also referred to as "positional deviation") at the time when the foil of the lead alloy is attached to the substrate, or wrinkles or breakage caused by local extension may occur in the foil of the lead alloy.

When a positional deviation, wrinkles, or breakage occurs in the foil of the lead alloy, it is difficult to smoothly manufacture the lead storage battery electrode, and a yield decreases, so that the productivity of the lead storage battery electrode or the lead storage battery may decrease.

A technology to increase the strength of a lead foil is proposed by PTLS 1, 2, for example, but the technology is not applicable to the foil of the lead alloy used for the lead storage battery electrode.

### Citation List

### Patent Literature

PTL 1: JU 56-172546 A
PTL 2: JP 58-164214 A

### Summary of Invention

### Technical Problem

In view of this, an object of the present invention is to provide a lead alloy that is hard to cause extension even when force is applied. Further, another object of the present invention is to provide a lead storage battery electrode, a lead storage battery, and a power storage system each having a high productivity.

### Solution to Problem

A lead alloy according to one aspect of the present invention is a lead alloy in which the half width of a (311) diffraction peak in a diffraction chart obtained by analyzing the lead alloy by an X-ray diffraction method is 1.4 times or more of the half width of a (311) diffraction peak in a diffraction chart obtained by analyzing powder of pure lead by the X-ray diffraction method.

Further, a lead storage battery electrode according to another aspect of the present invention includes an electrode lead layer made of the lead alloy according to the one aspect, and an active material disposed on the surface of the electrode lead layer.

Further, a lead storage battery according to further another aspect of the present invention includes the lead storage battery electrode according to the above-described another aspect.

Further, a power storage system according to still another aspect of the present invention includes the lead storage battery according to the further another aspect and is configured to store electricity in the lead storage battery.

### Advantageous Effects of Invention

The lead alloy according to the present invention is a lead alloy in which the half width of a (311) diffraction peak in a diffraction chart obtained by analyzing the lead alloy by the X-ray diffraction method is 1.4 times or more of the half width of a (311) diffraction peak in a diffraction chart obtained by analyzing powder of pure lead by the X-ray diffraction method, so that extension is hard to occur even when force is applied to the lead alloy. Further, an electrode lead layer in each of the lead storage battery electrode, the lead storage battery, and the power storage system according to the present invention is made of the lead alloy according to the present invention, and hereby, it is possible to manufacture the lead storage battery electrode, the lead storage battery, and the power storage system with high productivity.

### Brief Description of Drawings

FIG. 1 is a sectional view to describe a structure of a bipolar lead storage battery according to one embodiment of a lead storage battery according to the present invention; and
FIG. 2 is a view to describe one embodiment of a power storage system according to the present invention.

### Description of Embodiments

One embodiment of the present invention will be described. Note that the embodiment described below describes an example of the present invention. Further, various changes or improvements can be added to the present embodiment, and embodiments with the changes or improvements can be also included in the present invention.

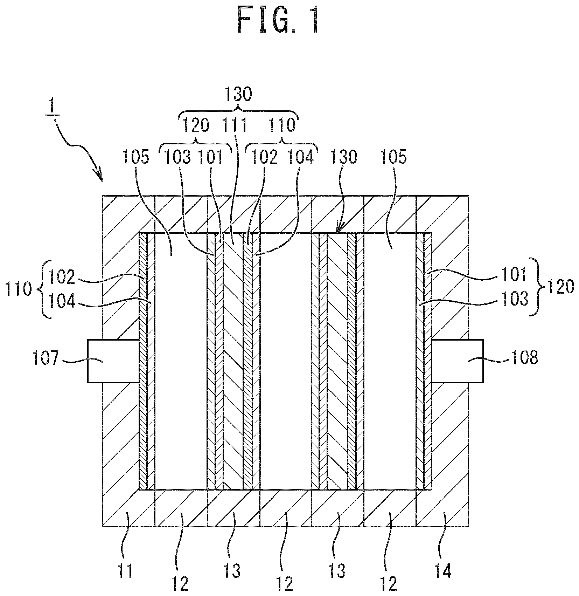

A structure of a lead storage battery 1 according to one embodiment of the present invention will be described with reference to FIG. 1. The lead storage battery 1 illustrated in FIG. 1 is a bipolar lead storage battery and includes first plate units each including a negative electrode 110 fixed to a first plate 11 having a flat-plate shape, second plate units each including an electrolytic layer 105 fixed to the inside of a second plate 12 having a frame-plate shape, a third plate unit including a bipolar electrode 130 fixed to the inside of a third plate 13 having a frame-plate shape, the bipolar electrode 130 including a positive electrode 120 formed on one surface of a substrate 111 and a negative electrode 110 formed on the other surface of the substrate 111, and a fourth plate unit including a positive electrode 120 fixed to a fourth plate 14 having a flat-plate shape.

When the second plate units and the third plate units are alternately laminated on one another between the first plate unit and the fourth plate unit, the lead storage battery 1 having a generally rectangular solid shape is formed. The number of the second plate units to be laminated and the number of the third plate units to be laminated are set such that the power storage capacity of the lead storage battery 1 has a desired value.

The first to fourth plates 11, 12, 13, 14 and the substrates 111 are made of well-known molding resin, for example. The first to fourth plates 11, 12, 13, 14 are fixed to each other by an appropriate method such that the inside of the lead storage battery 1 is sealed to prevent an electrolytic solution from flowing outside.

A negative terminal 107 is fixed to the first plate 11, and the negative electrode 110 fixed to the first plate 11 is electrically connected to the negative terminal 107.

A positive terminal 108 is fixed to the fourth plate 14, and the positive electrode 120 fixed to the fourth plate 14 is electrically connected to the positive terminal 108.

The electrolytic layer 105 is constituted by a glass-fiber mat impregnated with an electrolytic solution containing sulfuric acid, for example.

The negative electrode 110 includes a negative lead layer 102 made of a well-known copper foil, for example, and a negative active material layer 104 disposed on the surface of the negative lead layer 102.

The positive electrode 120 includes a positive lead layer 101 (corresponding to an "electrode lead layer" as a constituent feature of the present invention) made of a foil of a lead alloy according to the present embodiment (described later), and a positive active material layer 103 disposed on the surface of the positive lead layer 101.

The positive electrode 120 and the negative electrode 110 are fixed to a front surface and a back surface of the substrate 111, respectively, and are electrically connected thereto by an appropriate method. Alternatively, each of the positive electrode 120 and the negative electrode 110 may be fixed to one surface of each of two substrates 111, and the other surfaces of the two substrates 111 may be electrically connected and fixed to each other.

In the lead storage battery 1 according to the present embodiment with such a configuration, the bipolar electrode 130 as a lead storage battery electrode is constituted by the substrate 111, the positive lead layer 101, the positive active material layer 103, the negative lead layer 102, and the negative active material layer 104. A bipolar electrode is a single electrode having functions both as a positive electrode and a negative electrode.

Further, the lead storage battery 1 according to the present embodiment has a battery configuration in which cell members are connected in series to each other by assembling the cell members such that the cell members are laminated alternately, the cell members being each configured such that the electrolytic layer 105 is provided between the positive electrode 120 including the positive active material layer 103 and the negative electrode 110 including the negative active material layer 104.

Note that the present embodiment deals with a bipolar lead storage battery including a bipolar electrode as a single electrode having both functions as a positive electrode and a negative electrode, as an example of the lead storage battery, but the lead storage battery according to the present embodiment may be a lead battery including electrodes having a function as a positive electrode and electrodes having a function as a negative electrode separately such that positive electrodes and negative electrodes as different bodies are disposed alternately.

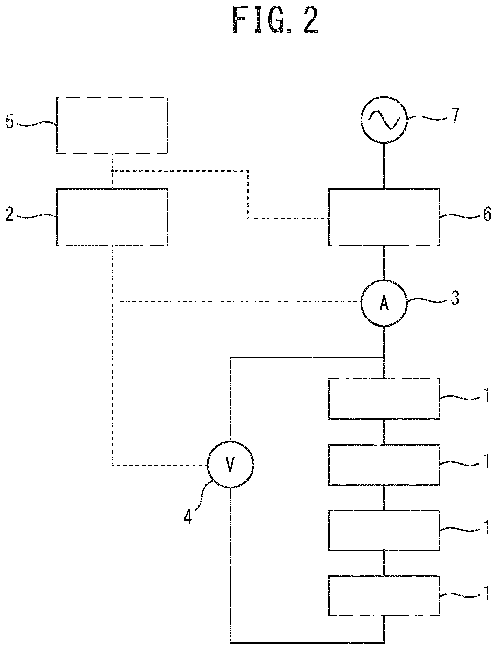

A power storage system can be constituted by using the lead storage battery 1 according to the present embodiment illustrated in FIG. 1. An example of the power storage system is illustrated in FIG. 2. The power storage system in FIG. 2 includes an assembled battery including a plurality of lead storage batteries 1, 1, ... (four lead storage batteries in the example of FIG. 2) connected in series to each other, an AC-DC converter 6 configured to perform AC-DC conversion (conversion between alternating-current power and direct-current power) at the time of charge and discharge of the assembled battery, a current sensor 3 provided between the assembled battery and the AC-DC converter 6 and configured to measure a charge-discharge current at the time of charge and discharge of the assembled battery, a voltage sensor 4 configured to measure the voltage of the assembled battery, a storage-state monitoring device 2 configured to receive measurement data transmitted from the current sensor 3 and the voltage sensor 4 and perform a state determination on the assembled battery and a warning determination based on the measurement data thus received, and an energy management system 5 configured to receive storage-stage information transmitted from the storage-state monitoring device 2 based on a result of the state determination or the warning determination thus performed and determine whether the assembled battery is charged or discharged based on the storage-state information thus received.

The energy management system 5 determines whether the assembled battery is charged or discharged, based on the storage-state information received from the storage-state monitoring device 2, and transmits a signal to instruct execution of charge or discharge to the AC-DC converter 6. In a case where the AC-DC converter 6 receives a signal to instruct execution of discharge, the AC-DC converter 6 converts direct-current power discharged from the assembled battery into alternating-current power and outputs the alternating-current power into a commercial power system 7. In the meantime, in a case where the AC-DC converter 6 receives a signal to instruct execution of charge, the AC-DC converter 6 converts alternating-current power input from the commercial power system 7 into direct-current power and charges the assembled battery. Note that the number of the lead storage batteries 1 connected in series is determined by an input voltage range of the AC-DC converter 6.

### <Lead alloy constituting positive lead layer 101>

Next will be described a foil of a lead alloy constituting the positive lead layer 101. The foil is made of a lead alloy according to the present embodiment. The lead alloy according to the present embodiment is a lead alloy in which the half width of a (311) diffraction peak in a diffraction chart obtained by analyzing the lead alloy by an X-ray diffraction method is 1.4 times or more of the half width of a (311) diffraction peak in a diffraction chart obtained by analyzing powder of pure lead by the X-ray diffraction method.

In other words, when Wa indicates the half width of the (311) diffraction peak in the diffraction chart obtained by analyzing the lead alloy according to the present embodiment by the X-ray diffraction method, and Wp indicates the half width of the (311) diffraction peak in the diffraction chart obtained by analyzing powder of pure lead by the X-ray diffraction method, a ratio Wa/Wp (hereinafter also referred to as a" half-width ratio") between the half widths is 1.4 or more.

Since the half-width ratio is 1.4 or more, the lead alloy is maintained at a high dislocation density. On this account, the lead alloy according to the present embodiment is hard to cause overall extension or local extension even when force is applied to the lead alloy. It is necessary for the half-width ratio to be 1.4 or more, but in order that extension is harder to occur when force is applied, the half-width ratio is preferably 1.7 or more. Further, the half-width ratio is preferably 10 or less.

The lead alloy according to the present embodiment is hard to cause overall extension or local extension even when force is applied to the lead alloy, and therefore, when a foil of a lead alloy to constitute the positive lead layer 101 is made of the lead alloy according to the present embodiment, the thickness of the positive lead layer 101 can be reduced (e.g., 0.5 mm or less). That is, in a case where the bipolar electrode 130 is manufactured such that the foil of the lead alloy to constitute the positive lead layer 101 is attached to the substrate 111 by pressing the foil of the lead alloy against the substrate 111 with a roller, extension might occur in the foil of the lead alloy due to force applied by the roller, but when the foil of the lead alloy is made of the lead alloy according to the present embodiment, extension is hard to occur even when force is applied to the lead alloy, so that extension is hard to occur in the foil of the lead alloy even when the thickness of the foil of the lead alloy is small (e.g., 0.5 mm or less). Further, since local extension is hard to occur, even when the thickness of the foil of the lead alloy is small, the foil of the lead alloy is hard to wrinkle or break. Accordingly, at the time when the foil of the lead alloy is attached to the substrate 111, a positional deviation, wrinkles, or breakage is hard to occur in the foil of the lead alloy.

The effectiveness of the effect of the lead alloy according to the present embodiment is more remarkable as the thickness of the foil of the lead alloy is smaller. Further, the positional deviation easily increases as the dimension of the foil of the lead alloy is larger, and therefore, the effectiveness of the effect of the lead alloy according to the present embodiment is more remarkable as the dimension of the foil of the lead alloy is larger.

Since a positional deviation, wrinkles, or breakage is hard to occur in the foil of the lead alloy at the time when the bipolar electrode 130 is manufactured, the bipolar electrode 130 can be manufactured smoothly, and the bipolar electrode 130 or the lead storage battery 1 can be manufactured with high productivity.

Further, in the lead storage battery 1 in which the positive lead layer 101 is made of the lead alloy according to the present embodiment, the thickness of the positive lead layer 101 can be reduced, so that the internal volume of the lead storage battery 1 can be used efficiently.

Note that the present embodiment deals with, as an example, the lead storage battery 1 in which the positive lead layer 101 is made of the foil of the lead alloy according to the present embodiment, and the negative lead layer 102 is made of a well-known lead foil, but reversely to this example, the positive lead layer 101 may be made of a well-known lead foil, and the negative lead layer 102 may be made of the foil of the lead alloy according to the present embodiment, or the positive lead layer 101 and the negative lead layer 102 may be both made of the foil of the lead alloy according to the present embodiment.

### <Alloy composition of lead alloy>

Next will be described the alloy composition of the lead alloy according to the present embodiment. The lead alloy according to the present embodiment may be a lead alloy containing tin of 0.4% by mass or more but 2% by mass or less and bismuth of 0.004% by mass or less with the balance of lead and unavoidable impurities. Alternatively, the lead alloy according to the present embodiment may be a lead alloy containing tin of 0.4% by mass or more but 2% by mass or less, bismuth of 0.004% by mass or less, and at least one of calcium of 0.1% by mass or less, silver of 0.05% by mass or less, and copper of 0.05% by mass or less with the balance of lead and unavoidable impurities. The alloy compositions as described above can easily provide a lead alloy that is hard to extend even when force is applied.

When the lead alloy contains tin, an excellent adhesion property is achieved between the positive lead layer 101 made of the lead alloy and the positive active material layer 103. However, when the lead alloy contains a large amount of tin, intergranular corrosion susceptibility becomes higher, so that the positive lead layer 101 tends to easily deteriorate. Therefore, the content of tin in the lead alloy is preferably 0.4% by mass or more but 2.0% by mass or less, and more preferably 0.6% by mass or more but 1.8% by mass or less. Further, when the lead alloy contains calcium, silver, or copper, the lead alloy has minute crystal grains. Accordingly, when the lead alloy contains tin and at least one of calcium, silver, and copper, it is possible to yield an effect that the strength of the lead alloy is raised and the lead alloy is hard to deform.

Note that calcium, silver, and copper may be added to the lead alloy positively, but even if they are not added positively, they may be contained as unavoidable impurities due to mixing from base metal or the like. Respective maximum amounts of calcium, silver, and copper that can be contained as the unavoidable impurities are 0.012% by mass.

Meanwhile, when the lead alloy contains bismuth, moldability of the lead alloy by rolling or the like tends to decrease. That is, bismuth is one of impurities that are preferably not contained in the lead alloy according to the present embodiment as much as possible. Therefore, the content of bismuth in the lead alloy is preferably 0.004% by mass or less, and most preferably 0% by mass. However, in consideration of the cost of the lead alloy, the content of bismuth is preferably 0.0004% by mass or more.

In the meantime, the lead alloy may contain an element other than lead, tin, calcium, silver, copper, and bismuth. This element is an impurity contained in the lead alloy unavoidably, and the total content of the element other than lead, tin, calcium, silver, copper, and bismuth in the lead alloy is preferably 0.01% by mass or less, and most preferably 0% by mass.

### <Control method of crystalline structure of lead alloy>

Next will be described a method for manufacturing the foil of the lead alloy to constitute the positive lead layer 101 by using rolling with reference to an example. When the foil of the lead alloy is manufactured by rolling after a heat treatment, it is possible to control a crystalline structure ((311)) of the lead alloy. However, the rolling and the heat treatment are described just as examples of a control method of controlling the crystalline structure ((311)) in the lead alloy according to the present embodiment, and the crystalline structure may be controlled by a method other than the rolling and the heat treatment.

This example deals with a method of manufacturing the foil of the lead alloy by first performing the heat treatment and then performing the rolling. This heat treatment is performed such that, after a heat treatment at a first stage, a heat treatment at a second stage to maintain a predetermined temperature for a predetermined period of time is performed without cooling to a room temperature.

As the condition of the heat treatment at the first stage, the temperature is preferably 290°C or more but 320°C or less, and more preferably 295°C or more but 310°C or less.

As the condition of the heat treatment at the second stage, the temperature is preferably 40°C or more but 100°C or less, and more preferably 60°C or more but 80°C or less, and the heat treatment time is preferably two weeks or more, and more preferably three weeks or more.

As the condition of the rolling, the rolling reduction ratio is preferably 30% or more, and more preferably 50% or more.

By the series of treatments, it is possible to evenly disperse minute deposits (crystals) over the foil of the lead alloy even when the thickness of the foil of the lead alloy is small (e.g., 0.5 mm or less) and to maintain a high dislocation density. Hereby, overall extension or local extension is hard to occur when force is applied to the foil of the lead alloy.

### [Examples]

The following further describes the present invention in detail with reference to examples and comparative examples. Foils were each manufactured by performing the heat treatment on an ingot having a thickness of 8 mm and made of a lead alloy having an alloy composition shown in Table 1 and then performing rolling on the ingot. The condition of the heat treatment was that an ingot heated to 300°C was put into a furnace maintained at a predetermined heat treatment temperature and maintained for a predetermined heat treatment time without cooling the ingot to a room temperature. Heat treatment temperatures and heat treatment times were set as shown in Table 1.
Note that the condition of a heat treatment in Comparative Example 1 is that only heating to 300°C is performed, and a subsequent heat treatment using a furnace is not performed. Further, Comparative Example 6 uses pure lead containing a small amount of bismuth instead of a lead alloy.

The condition of the rolling in Examples 1 to 15 and Comparative Examples 1 to 4 and 6 is that an ingot having a thickness of 8 mm is rolled to manufacture a foil having a thickness of 0.25 mm. The rolling reduction ratio of this rolling is 96.9%. The condition of the rolling in Example 16 is that an ingot having a thickness of 8 mm is rolled to manufacture a foil having a thickness of 0.40 mm. The rolling reduction ratio of this rolling is 95.0%. The condition of the rolling in Example 17 is that an ingot having a thickness of 8 mm is rolled to manufacture a foil having a thickness of 0.10 mm. The rolling reduction ratio of this rolling is 98.8%. Note that, in Comparative Example 5, a defect called an edge crack occurred in an end portion of a plate during the rolling, and therefore, no foil was obtained.

**[Table 1]**

| | | Alloy composition (% by mass) | | | | | | Heat treatment | | Thickness of foil (mm) | Half-width ratio | 0.2% Offset yield strength (MPa) | Maximum tensile strength (MPa) | Tensile test |
|---|---|---|---|---|---|---|---|---|---|---|---|---|---|---|
| | | Sn | Ca | Ag | Cu | Bi | Pb | Temperature (°C) | Time | | | | | |
| | 1 | 2.1 | 0.09 | 0 | 0 | 0.002 | Balance | 70 | Two weeks | 0.25 | 1.7 | 48 | 51 | OK |
| | 2 | 0.3 | 0.09 | 0 | 0 | 0.002 | Balance | 70 | Two weeks | 0.25 | 1.7 | 41 | 45 | OK |
| | 3 | 1.7 | 0.11 | 0 | 0 | 0.002 | Balance | 70 | Two weeks | 0.25 | 1.5 | 46 | 50 | OK |
| | 4 | 1.7 | 0.09 | 0 | 0.053 | 0.002 | Balance | 70 | Two weeks | 0.25 | 1.5 | 47 | 53 | OK |
| | 5 | 1.7 | 0.09 | 0 | 0 | 0.002 | Balance | 70 | Two weeks | 0.25 | 1.7 | 45 | 50 | OK |
| | 6 | 1.4 | 0.06 | 0 | 0 | 0.002 | Balance | 70 | Two weeks | 0.25 | 1.8 | 42 | 47 | OK |
| | 7 | 1.1 | 0.02 | 0 | 0 | 0.002 | Balance | 70 | Two weeks | 0.25 | 1.9 | 40 | 55 | OK |
| | 8 | 1.1 | 0 | 0.052 | 0 | 0.002 | Balance | 70 | Two weeks | 0.25 | 1.5 | 23 | 27 | OK |
| Ex. | 9 | 1.1 | 0 | 0.035 | 0 | 0.002 | Balance | 70 | Two weeks | 0.25 | 1.7 | 22 | 26 | OK |
| | 10 | 1.1 | 0 | 0 | 0.03 | 0.002 | Balance | 70 | Two weeks | 0.25 | 1.7 | 22 | 26 | OK |
| | 11 | 1.1 | 0 | 0 | 0 | 0.002 | Balance | 70 | Two weeks | 0.25 | 1.7 | 23 | 27 | OK |
| | 12 | 1.7 | 0.09 | 0 | 0 | 0.002 | Balance | 50 | Two weeks | 0.25 | 1.4 | 43 | 47 | OK |
| | 13 | 1.7 | 0.09 | 0 | 0 | 0.002 | Balance | 90 | Two weeks | 0.25 | 1.4 | 42 | 44 | OK |
| | 14 | 1.7 | 0.09 | 0.01 | 0 | 0.002 | Balance | 70 | Two weeks | 0.25 | 1.7 | 50 | 56 | OK |
| | 15 | 1.7 | 0.09 | 0 | 0.01 | 0.002 | Balance | 70 | Two weeks | 0.25 | 1.7 | 49 | 55 | OK |
| | 16 | 1.7 | 0.09 | 0 | 0 | 0.002 | Balance | 70 | Two weeks | 0.40 | 1.7 | 47 | 52 | OK |
| | 17 | 1.7 | 0.09 | 0 | 0 | 0.002 | Balance | 70 | Two weeks | 0.10 | 1.7 | 43 | 48 | OK |
| Comp. Ex. | 1 | 1.7 | 0.09 | 0 | 0 | 0.002 | Balance | Not performed | - | 0.25 | 1.0 | 18 | 23 | NG |
| | 2 | 1.7 | 0.09 | 0 | 0 | 0.002 | Balance | 70 | Two hours | 0.25 | 1.2 | 17 | 22 | NG |
| | 3 | 1.7 | 0.09 | 0 | 0 | 0.002 | Balance | 30 | Two weeks | 0.25 | 1.2 | 17 | 22 | NG |
| | 4 | 1.7 | 0.09 | 0 | 0 | 0.002 | Balance | 120 | Two weeks | 0.25 | 0.6 | 16 | 20 | NG |
| | 5 | 1.7 | 0.09 | 0 | 0 | 0.010 | Balance | 70 | Two weeks | - | - | - | - | - |
| | 6 | 0 | 0 | 0 | 0 | 0.010 | Balance | 70 | Two weeks | 0.25 | 0.6 | 4 | 12 | NG |

Subsequently, respective surfaces (rolled surfaces) of the foils manufactured in Examples 1 to 17 and Comparative Examples 1 to 4 and 6 were analyzed by the X-ray diffraction method, and X-ray diffraction charts were obtained. More specifically, θ/2θ measurement was performed by use of an X-ray diffractometer X'pert PRO made by Spectris Co., Ltd. In the measurement, a Cu target was used and an X-ray opening was set to 5 mm × 5 mm. Then, the half width of a (311) diffraction peak in each of the obtained X-ray diffraction charts of the foils in Examples 1 to 17 and Comparative Examples 1 to 4 and 6 was found.

Further, θ/2θ measurement was performed on powder of pure lead (powder of pure lead made by The Nilaco Corporation, the degree of purity is 99.999%) in a similar manner to the above, and the half width of a (311) diffraction peak in an obtained X-ray diffraction chart was found. The half width of each of the foils in Examples 1 to 17 and Comparative Examples 1 to 4 and 6 was divided by the half width of the powder of pure lead to calculate a half-width ratio. Results are shown in Table 1.

Subsequently, each of the foils in Examples 1 to 17 and Comparative Examples 1 to 4 and 6 was cut to manufacture three test pieces each having a width of 15 mm and a length of 100 mm. At this time, the test pieces were manufactured such that the longitudinal direction of the test pieces was parallel to the rolling direction. Then, a tensile test was performed on each test piece at an elastic stress rate of 100 mm/min to find a 0.2% offset yield strength and a maximum tensile strength, and a resisting force (difficulty in extension upon application of force) to the applied force was evaluated. Note that the tensile direction of a test piece was a direction along the longitudinal direction of the test piece. Further, the average value of measurement results of three test pieces was regarded as the 0.2% offset yield strength and the maximum tensile strength of the test pieces. Results are shown in Table 1.

In Table 1, in a case where a foil has a 0.2% offset yield strength of 20 MPa or more and a maximum tensile strength of 25 MPa or more, the foil is determined to have a sufficiently large resisting force to the applied force, so that the foil is evaluated as "OK" in Table 1, and in a case where a foil has a 0.2% offset yield strength of less than 20 MPa and a maximum tensile strength of less than 25 MPa, the foil is determined to have an insufficient resisting force to the applied force, so that the foil is evaluated as "NG" in Table 1.

In a case where a foil has a 0.2% offset yield strength of 20 MPa or more and a maximum tensile strength of 25 MPa or more, overall extension or local extension is hard to occur in the foil of the lead alloy even when force is applied, and in view of this, the thickness of a positive lead layer made of the foil of the lead alloy can be reduced (e.g., 0.5 mm or less).

From the results shown in Table 1, the foils of Examples 1 to 17 each have a half-width ratio of 1.4 or more, and therefore, it is found that the foils have a sufficiently large resisting force to the applied force (that is, extension is hard to occur even when force is applied). In the meantime, the foils of Comparative Examples 1 to 4 and 6 each have a half-width ratio of less than 1.4, and therefore, it is found that the foils have an insufficient resisting force to the applied force.

### Reference Signs List

- 1: lead storage battery
- 101: positive lead layer
- 102: negative lead layer
- 103: positive active material layer
- 104: negative active material layer
- 105: electrolytic layer
- 110: negative electrode
- 111: substrate
- 120: positive electrode
- 130: bipolar electrode

## Claims

1. A lead alloy in which a half width of a (311) diffraction peak in a diffraction chart obtained by analyzing the lead alloy by an X-ray diffraction method is 1.4 times or more of a half width of a (311) diffraction peak in a diffraction chart obtained by analyzing powder of pure lead by the X-ray diffraction method.

2. The lead alloy according to claim 1, comprising:
tin of 0.4% by mass or more but 2% by mass or less and bismuth of 0.004% by mass or less with a balance of lead and unavoidable impurities.

3. The lead alloy according to claim 1, comprising:
tin of 0.4% by mass or more but 2% by mass or less, bismuth of 0.004% by mass or less, and at least one of calcium of 0.1% by mass or less, silver of 0.05% by mass or less, and copper of 0.05% by mass or less with a balance of lead and unavoidable impurities.

4. A lead storage battery electrode comprising:
an electrode lead layer made of the lead alloy according to any one of claims 1 to 3; and
an active material disposed on a surface of the electrode lead layer.

5. The lead storage battery electrode according to claim 4, wherein the lead storage battery electrode is used for a bipolar lead storage battery.

6. A lead storage battery comprising the lead storage battery electrode according to claim 4 or 5.

7. A power storage system comprising the lead storage battery according to claim 6, wherein the power storage system is configured to store electricity in the lead storage battery.
